(19) Europäisches Patentamt / European Patent Office / Office européen des brevets

(11) **EP 3 109 724 B1**

(12) **EUROPEAN PATENT SPECIFICATION**

(45) Date of publication and mention
of the grant of the patent:
**09.02.2022 Bulletin 2022/06**

(21) Application number: **15382337.2**

(22) Date of filing: **26.06.2015**

(51) International Patent Classification (IPC):
**G05D 1/10** *(2006.01)* **G05D 1/06** *(2006.01)*

(52) Cooperative Patent Classification (CPC):
**G05D 1/101**

(54) **METHOD AND SYSTEM OF CONTROLLING A FLIGHT OF AN AIRCRAFT SUBJECTED TO A REQUIRED TIME OF ARRIVAL CONSTRAINT**

VERFAHREN UND SYSTEM ZUR STEUERUNG EINES FLUGS EINES FLUGZEUGS MIT EINER ANKUNFTSZEITBESCHRÄNKUNG

PROCÉDÉ ET SYSTÈME DE COMMANDE DE VOL D'UN AVION SOUMIS À UNE CONTRAINTE D'HEURE D'ARRIVÉE REQUISE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.12.2016 Bulletin 2016/52**

(73) Proprietor: **The Boeing Company**
**Chicago, IL 60606-1596 (US)**

(72) Inventor: **Garrido Lopez, David**
**28042 Madrid (ES)**

(74) Representative: **Clarke Modet & Co.**
**C/ Suero de Quiñones 34-36**
**28002 Madrid (ES)**

(56) References cited:
**US-A1- 2014 236 397 US-B2- 8 150 565**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present disclosure relates to a method of controlling a flight of an aircraft subjected to a single required time of arrival constraint at a target waypoint ahead, and to an additional flight variable that is not the Cost Index, by modifying the Mach speed and descent speed independently. The disclosure also relates to a system for controlling the flight of an aircraft subjected to a required time of arrival constraint and to a computer program that, when executed, carries out said method. The method of controlling the flight of the aircraft is carried out during the cruise phase or the initial part of the descent (that is flown in Mach mode) of the flight and the target waypoint lies in the descent phase of the flight. The main technical field of the disclosure is the air traffic control, especially in areas in which incoming air traffic may cause conflicts and subsequent safety risks, such as areas close to the airports, as well as the optimization of a variety of flight parameters.

## BACKGROUND

The Required Time of Arrival (RTA) function of an aircraft is activated when the pilot sets a required time of arrival at a target waypoint ahead. The function then predicts a trajectory that satisfies the time constraint, and modifies the flight speeds accordingly. Prior art can be found in US 8 150 565 B2.

If the flight is in cruise phase and the target waypoint is in the descent phase, a conventional RTA function does not alter current cruise speed and scheduled descent speed independently.

Cruise speed and descent speed, and more particularly cruise Mach speed and descent calibrated air speed (CAS), are hence the two main search variables to find trajectories that comply with the RTA constraint. However, conventional RTA functions iterate over the Cost Index (CI) of the aircraft which couples cruise Mach and descent CAS variations. So, said conventional RTA functions iterate over a single variable, the Cost Index, in order to find the trajectory. Each Cost Index defines a unique Mach/CAS combination, given the aircraft cruise altitude, aircraft weight, and meteorological conditions. The Cost Index is used for the initial trajectory prediction as well as for speed corrections during the flight.

A given CI implies a balance between fuel and operational costs. For CI=0, the minimum-fuel trajectory is taken without consideration of operational costs. As the CI increases, flight speeds increase too, and, consequently, fuel costs become higher while flight time is reduced.

However, current capabilities permit finding a variety of Mach/CAS combinations not coupled by the CI.

As previously explained, using CI-coupled Mach/CAS combinations lead to solutions that may often be far from desirable since the resulting descent CAS or cruise Mach may be very close (or equal) to the aircraft speed limits. The RTA function will require adjusting flight speeds during the flight and, if the initially specified speeds are very close to aircraft speed limits, the RTA may become unachievable. Besides, the resulting descent CAS or cruise Mach combinations may not result in the most fuel-efficient flight.

To comply with the RTA constraint, other solutions, such as the one disclosed in patent document US8150565-B2, employs intermediate waypoints and break the reference trajectory in as many trajectory segments as intermediate waypoints, calculating a cruise/descent speed pair for each trajectory segment, wherein each cruise/descent speed pair meets the corresponding RTA at the intermediate waypoint. However, these solutions fail to provide a single speed profile that complies with the required time of arrival constraint at the target waypoint and, at the same time, an additional flight criterion of avoiding reaching cruise speed and descent speed values close to the aircraft speed limits.

## SUMMARY

To achieve the advantages and avoid the drawbacks listed above, disclosed is a method and a system for controlling a flight of an aircraft subjected to a required time of arrival (RTA) constraint. More specifically, the method controls the flight of the aircraft to cause the aircraft to reach a target waypoint substantially at the RTA, said control being carried out by finding the best combination of cruise speed and descent speed of the aircraft depending on different criteria.

The instant disclosure provides a method for controlling a flight of an aircraft to enable the aircraft reliably and accurately to meet the RTA. The instant disclosure provides a method for accommodate and responsively modulate speed changes on cruise and descent phase of the flight.

Then, a first aspect of the present disclosure resides in a method of controlling a flight of an aircraft subjected to a required time of arrival constraint, the method comprising the steps of:

  a) receiving a required time of arrival (RTA) at a target waypoint (WPT) wherein the target WPT is located in a descent phase of the flight;
  b) calculating a map of estimated time of arrivals (ETA) at the target waypoint, wherein the map is a function of a cruise speed and of a descent speed of the aircraft, wherein cruise speed and descent speed are within speed limits;
c) generating a curve on the map, the curve representing combinations wherein each combination comprises a cruise speed and a descent speed, wherein the curve comprises a first branch wherein the cruise and descent speeds of each combination of the first branch introduces a same amount of time delay when the cruise speed is reduced to the minimum cruise speed limit of the aircraft as when the descent speed is reduced to the minimum descent speed limit of the aircraft;
d) selecting a combination of a cruise speed and a descent speed of the generated curve that complies RTA=ETA; and
e) modifying the cruise speed and the descent speed of the aircraft according to the selected combination.

Advantageously, the curve may comprise a second branch, wherein the cruise and descent speeds of each combination of the second branch introduces a same amount of time anticipation when cruise speed is increased to a maximum cruise speed limit of the aircraft as when descent speed is increased to a maximum descent speed limit of the aircraft.

The curve may comprise an intermediate branch that intersects the first branch and the second branch.

Advantageously, the cruise speed of each combination of the intermediate branch may be fixed to:

$$a = \frac{minimum\ cruise\ speed\ +\ maximum\ cruise\ speed}{2}$$

and wherein the curve comprises:

- combinations of the first branch whose cruise speed≤a, the combination with cruise speed=a defining a minimum descent speed;
- combinations of the second branch whose cruise speed≥a, the combination with cruise speed=a defining a maximum descent speed; and,
- combinations of the third branch whose descent speed is between minimum descent speed and maximum descent speed.

The selection of this third branch assures speed margins during the cruise phase of the flight and accelerates the transition between the combinations of the first and second branches, previously calculated.

In another particular embodiment of the method, step b) comprises establishing a contour map wherein each isocontour of the contour map represents a subset of cruise speed and descent speed pairs that satisfies an estimated time of arrival at the target waypoint.

In another particular embodiment of the method, it further comprises receiving a set of given flight conditions, wherein the given flight conditions comprise at least an aircraft weight, a cruise altitude, a flight plan and weather conditions.

In another particular embodiment of the method, it further comprises receiving a set of predefined or measured conditions for delimiting aircraft speed limits. Advantageously, the set of conditions may comprise a weight of the aircraft and a cruise altitude.

In another particular embodiment of the method, it further comprises receiving a flight plan, weather conditions, initial aircraft conditions and a cruise altitude, and determining the set of cruise speed and descent speed combinations to the required time of arrival.

In another particular embodiment of the method, it is dynamically and continuously executed during flight so as to modify the aircraft trajectory by changing the cruise speed and descent speed of the aircraft.

The present disclosure also extends to a system for controlling the flight of an aircraft subjected to a required time of arrival constraint. The system comprises a Flight Management System (FMS) (optionally a Flight Management Computer, FMC) in communication with a trajectory generator and a speed profile generator. Said FMS is configured for executing any of the above methods. Besides, the speed profile generator is configured for receiving a cruise speed and descent speed combination and generating a speed profile signal in response to said single cruise speed and descent speed combination, and the trajectory generator is configured for receiving the speed profile signal and generating the aircraft trajectory in response to the speed profile signal, so that the aircraft trajectory meets the RTA at the target WPT.

Advantageously, the FMS may be configured for receiving a weight of the aircraft and a cruise altitude and determining the aircraft speed limits.

Advantageously, the FMS may be configured for receiving a flight plan, weather conditions, initial aircraft conditions and a cruise altitude and determining the set of cruise speed and descent speed combinations corresponding to the RTA.

Finally, the present disclosure also extends to a computer program comprising program code which, when executed by the previously described system, carries out any of the above methods.

The present disclosure also extends to an aircraft arranged to implement any of the above methods and to an aircraft comprising any of the above systems.

Further, the disclosed method may be adapted to be effective when applied to different aircraft control systems that may rely on a variety of method for adjusting flight speed.

The method and system herein described, removes limitations to the RTA function for cruise-descent trajectories. The current technology relies on a one-dimensional search of Mach/CAS combinations coupled by Cost Index, while this disclosure generalizes the search to two independent dimensions: Mach and CAS which are calculated independently. Once that generalization is adopted, different optimization criteria can then be applied in order to narrow the Mach/CAS search. The final combination does not correspond to a CI-coupled combination, but it corresponds to a combination that optimizes an additional flight parameter that is a better solution than the CI-coupled combination.

## BRIEF DESCRIPTION OF THE FIGURES

Figure 1.- Shows the lateral path of a first flight example between the moment in which the pilot activates the RTA function at BNA waypoint until the aircraft arrives to the destination airport (Atlanta International Airport).

Figure 2.- Shows the pressure altitude (top graph) and Calibrate airspeed (bottom graph) of the predicted trajectory of the flight example of figure 1, as a function of flown distance, starting from the point where the RTA function is activated by the pilot.

Figure 3.- Shows a isocontours graph of estimated arrival times for an RTA at an intermediate waypoint for the flight example of figures 1 and 2, as a function of the descent CAS and the Cruise Mach and descent Mach. Arrival times (in seconds) are relative to the instant when the RTA function is activated by the pilot.

Figure 4.- Shows the isocontours graph of figure 3 also including the CI values (dash-dot line) for this particular flight example.

Figure 5.- Shows the isocontours graph of figure 4 also including alternative Mach/CAS speed combinations that maximizes likelihood of RTA success (thick dashed line).

Figure 6.- Shows the isocontours graph of figure 4 also including isocontours of fuel burnt during the RTA operation (kg) (thin dashed lines) and a set of Mach/CAS combinations (thickest dashed line) that result in a minimum fuel consumption for each given time of arrival.

Figure 7.- Shows a isocontours graph of estimated arrival times for an RTA at an target waypoint and the Mach/CAS combinations as a function of CI (dash-dot line) for a second flight example. This second flight example corresponds to an aircraft with an initial weight 13% smaller, approximately, than the aircraft of the first flight example.

Figure 8.- Shows the isocontours graph of figure 7 also including isocontours of fuel burnt during the RTA operation (kg) (thin dashed lines) and a set of Mach/CAS values (thickest dashed line) that result in a minimum fuel consumption for each given time of arrival.

Figure 9.- Shows a flow diagram in which a particular embodiment of the method of the disclosure is disclosed. More specifically, it shows a flow diagram with the method steps that allow the disclosure to find the best RTA-constrained trajectories that avoid aircraft speed limits.

Figure 10.- Shows a flow diagram in which a particular embodiment of the method of the disclosure is disclosed. More specifically, it shows a flow diagram with the method steps that allow the disclosure to find the RTA-constrained trajectory with least estimated fuel consumption.

## DETAILED DESCRIPTION

Next, a description of several examples of particular embodiments of the present disclosure is carried out, with illustrative character and without limitation, making reference to the numbering used in the figures.

The present disclosure relates to a method of controlling a flight of an aircraft under a required time of arrival constraint.

In order to describe the following examples of particular embodiments of the disclosure, a first flight example with the following conditions has been taken:

- Wide-body commercial aircraft;
- Initial conditions: cruising at an altitude of 35000 ft., at maximum landing weight (MLW);
- Atmospheric conditions: No winds and standard atmosphere.

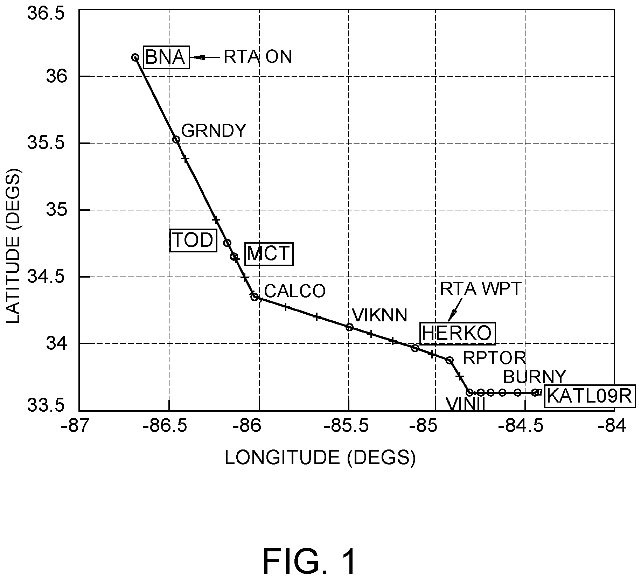

Figure 1 shows the lateral path of a flight example consisting on a standard arrival to the runaway 9 of the Atlanta International Airport (KATL09R). The initial point at which the RTA function of the aircraft is activated for this particular example is BNA (a navigation aid close to Nashville, Tennessee) which is about 205 NM away from the runway in along-track distance. At this initial point, the pilot sets an RTA at a target waypoint over "HERKO", which is about 45 NM away from the runway in along-track distance. Other intermediate waypoints (GRNDY, CALCO, VIKNN, RPTOR, VINII, BURNY) are shown in figure 1, for clarity reasons. Also points "TOD" and "MCT" are shown, which correspond to the "Top of Descent" point and the "Mach to CAS Transition" point, respectively.

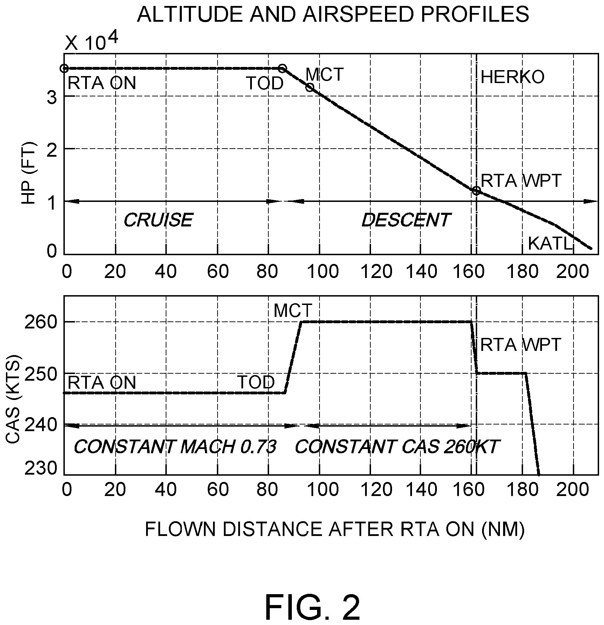

Figure 2 shows the pressure altitude (top graph) and Calibrate Airspeed (CAS) (bottom graph) for the flight example of figure 1, as a function of the along-track distance from the initial point "BNA" at which the RTA function has been activated. The pressure altitude graph shows a cruise phase of approximately 85 NM, and a descent phase of 120 NM for this particular example. The RTA waypoint (RTA WPT) at "HERKO" is well in the descent phase, with a predicted altitude close to 10000 ft.

The speed profile (bottom graph) describes the flight of the aircraft with a constant cruise Mach (0.73) from BNA to TOD, a constant descent Mach (260 KT) from TOD to the MCT and a constant descent CAS from the MCT to the "HERKO" (260 KT).

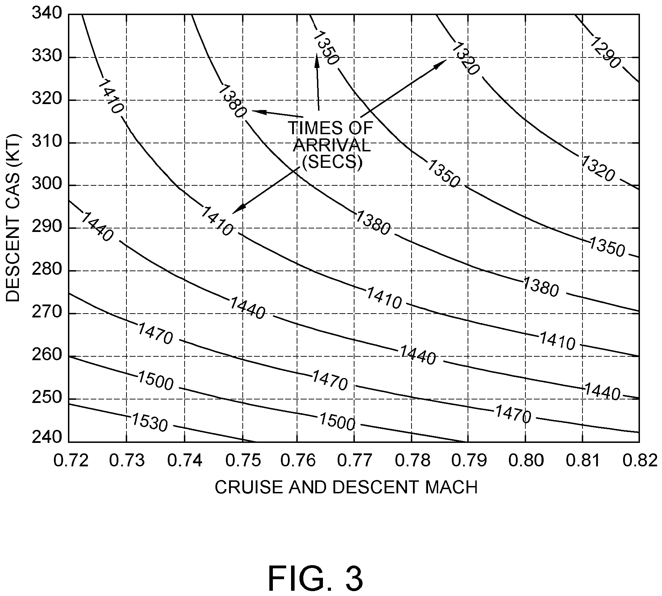

In a particular embodiment of the disclosure, and for the particular flight example of figures 1 and 2, a contour map of achievable times of arrival to the target waypoint as a function of cruise/descent Mach and descent CAS, is calculated, as shown in figure 3. The t=0 reference represents the moment when pilot activates the RTA function at "BNA". The estimated arrival times are represented by solid lines of constant time. The boundaries of this graph are the Mach and CAS speed limits of this particular flight example. For this example the RTA function will never program CAS speeds below 240 KT or above 340 KT, and will never program Mach speeds below 0.72 or above 0.82. In general speed limits depend on weight of the aircraft and flight altitude (cruise level 35000 ft. and weight 144000 lbs.). According to figure 3, the earliest time of arrival that can be achieved by the aircraft for this particular flight example is 1280 seconds approx. (that is reaching the RTA waypoint 21 minutes and 20 seconds past initial time) flying at M=0.82 and CAS=340 KT. The latest time of arrival that can be achieved is 1560 seconds, which means reaching the target RTA waypoint 26 minutes past initial time, flying at M=0.72 and CAS=240 KT.

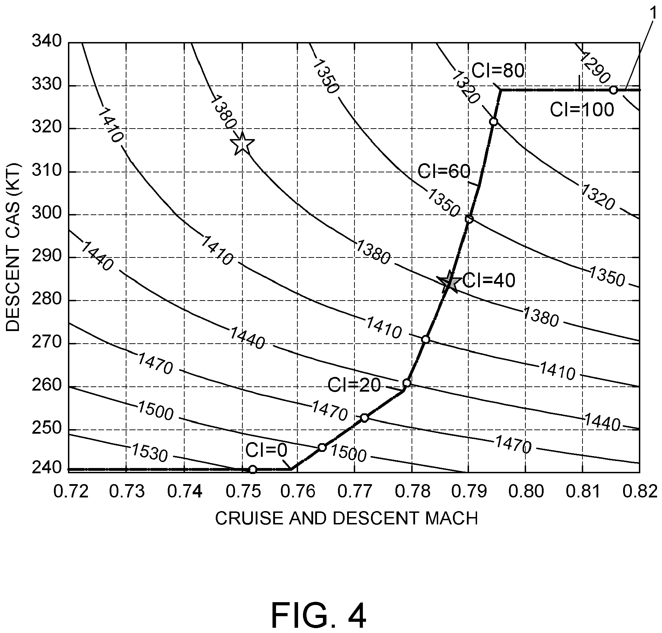

Figure 4 shows the possible cruise Mach/descent CAS combinations as a function of Cost Index (CI) for this particular flight example. The dash-dot line (1) superposed to the contour map corresponds to the CI values. Current Flight Management Systems (FMS), and more particularly Flight Management Computers (FMC), iterate over CI (1) to find the Mach/CAS combination that satisfies a given RTA. Assuming that, for example, the pilot enters a RTA= initial time + 23min (1380 seconds), the FMS will find the trajectory corresponding to the intersection of RTA=1380s (solid line tagged with 1380) and the dash-dot line corresponding to the CI values. The resulting CI is equal to 40 approximately, and the speeds that correspond to the mentioned RTA are M=0.786 CAS=284 KT (represented by a dark star in the figure). According to figure 4 many different Mach/CAS combinations lead to a trajectory satisfying the RTA=1380s other than the CI-coupled combination. All these combinations are represented by the solid contour line t=1380s. For instance, the M=0.75 CAS=316 KT trajectory will also satisfy the RTA=1380s (slower cruise and faster descent, labeled with a hollow star in the figure) . This alternative can be a better solution under certain conditions. For example, in a situation where the aircraft has another flight ahead during cruise and its speed cannot go beyond M=0.76 to avoid a conflict between the flights, considering an RTA=1380s and this traffic-imposed speed limit, a conventional FMS using CI would find the RTA unachievable since the only possible combination would be M=0.786 CAS=284 KT. However an FMS that can vary Mach and CAS independently might find the M=0.75 CAS=316KT combination that avoids this flight conflict.

So the existing solutions, which make use of CI to obtain coupled Mach/CAS speed combinations for a given RTA, do not serve depending on the existence of conditions or criteria which do not directly depend on the costly hour or fuel consumption of the aircraft and therefore, which do not directly depend on CI.

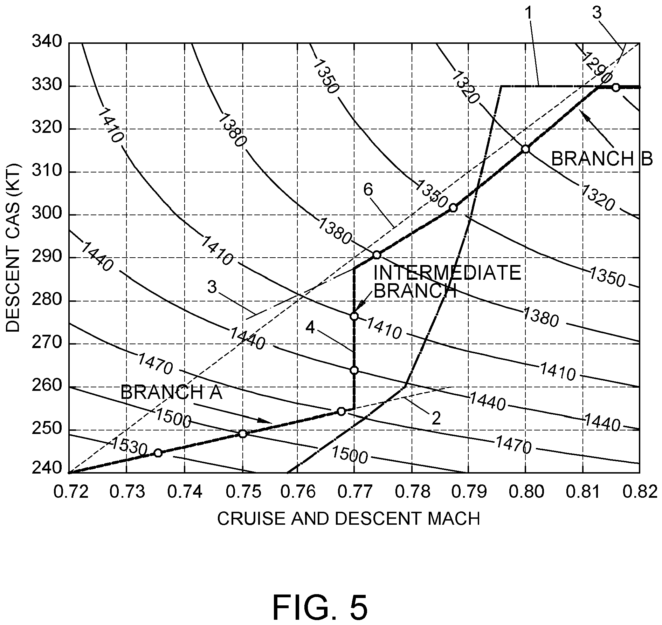

Figures 5 to 10 describe several particular embodiments of the method of controlling a flight of an aircraft under a required time of arrival constraint related with the flight example previously described and related with a second flight example detailed below. These embodiments are focused on finding the best Mach/CAS combinations according to different flight criteria.

Figure 5 discloses a first particular example of the method of the present disclosure where the selected criterion is maximizing the likelihood that the operation be successful by avoiding flight speed limits. In other words, the criterion that will condition the selected Mach/CAS combination, is that said Mach/CAS combination must avoid the Mach and CAS values close to the aircraft speed limits. This particular example of the method refers to the flight example described in figures 1 to 4.

The CI-coupled Mach/CAS solutions suffer from an important drawback. When larger times of arrival are required, the descent CAS may be very close to, or equal to, the minimum acceptable CAS. For this flight example, figure 4 shows that for RTA equal or greater than 1520 seconds, a conventional FMS finds a CI-coupled solution with minimum CAS (CAS_min)=240 KT and cruise Mach decreasing from 0.76 to 0.72 as the RTA increases. The problem with these solutions is that the aircraft descending at CAS_min will not be able to reduce its speed if, for instance, the aircraft experiences stronger-than-expected tailwinds. In that situation, the RTA becomes unachievable. The same problem happens for very early required times of arrival. For RTA equal to or lower than 1315 seconds, CAS is equal to the maximum, CAS max=330 KT; if for some unexpected reason the aircraft is running late, then it will not be able to increase CAS, and the RTA will become unachievable.

The best solution to maximize the likelihood of a successful operation is to allow the Mach/CAS combinations vary along a different curve than that defined by Cost Index. There can be a variety of alternative curves that achieve this.

According to figure 5, the first step of this particular example of the method is calculating the map of possible arrival times within the speed limits and under the given conditions (initial position, weight, meteorological prediction). This is represented by the solid lines. Depending on the central processor unit (CPU) capabilities, this map can be calculated with more or less accuracy, but in principle it is simply a matter or calculating arrival times for a 2D grid of cruise Mach and descent CAS values. In figure 5, a total of 121 conditions (11 cruise Mach x 11 descent CAS) were used. The CI-coupled Mach/CAS combinations (1) are also shown.

For the larger values of RTA, the method calculates the Mach/CAS combinations that permit the same amount of time delay when the Mach is reduced to the minimum Mach, Mach min as when the CAS is reduced to CAS min, see branch A (2). This way, the aircraft is able to reduce anticipations during cruise and during descent in the same measure. For example, for RTA=1500s (Mach=0.75, CAS=250KT) the aircraft can initially delay the estimated arrival by 30 seconds when reducing cruise speed to M=0.72 as well as when reducing descent speed to CAS=240KT.

For the earliest achievable RTAs, the method calculates the Mach/CAS combinations that permit the same amount of time anticipation by increasing the Mach to its maximum limit, Mach max as by increasing the descent CAS to CAS_max, see branch B (3). This way, the aircraft is able to acquire delays during the flight that can be mitigated during cruise as well as during descent in similar measure.

Branches A (2) and B (3) in general do not intersect. Therefore, an intermediate branch that links the branches (2,3) has to be chosen. Then a constant Mach intermediate branch (4) is selected, which allows same margins of Mach reduction and accelerations during cruise. However, other alternatives for choosing this intermediate branch may be selected.

Once the complete curve (thick dashed line) that defines the Mach/CAS combinations is obtained, the method iterates over these Mach/CAS values until the estimated time of arrival matches the required RTA.

In general, other curves (Mach/CAS combinations) that lead to Mach/CAS combinations with generous margins with respect to their corresponding maximum and minimum speed limits, can be found. An example is the diagonal (6) of the diagram in figure 5, from (Mach min, CAS_min) to (Mach_max, CAS_max). The Mach/CAS combinations given by this curve have margins with respect to the speed envelopes for all RTAs (except obviously for the maximum and minimum achievable RTAs). However, the capability of delaying the arrival during cruise and descent is not well balanced. For instance, for RTA = 1440 seconds, the solution is M=0.75 and CAS=270KT. If the cruise Mach is reduced to 0.72 the predicted arrival time is increased by 40 seconds approximately. In contrast, if descent CAS is reduced to 240 KT, the predicted arrival time is increased by almost 100 seconds. A greater margin of corrections during cruise would be desirable at the expense of reducing the generous margin during descent.

This method can also be extended to the case where more restrictive speed limits apply to the operation. For that case, the abscissa "x-" and ordinate "y-" ranges of the diagram would change according to the different speed limits, and, in consequence, the different branches have to be recalculated when these conditions change.

The method can also be applied during the RTA operation. When the estimated time of arrival differs beyond a certain threshold form the RTA, the RTA function will seek a new trajectory that satisfies the RTA. A new contour map of arrival times can be calculated at that moment, and a new curve of maximum likelihood of RTA success can be obtained, which will be used to derive the new Mach/CAS combination.

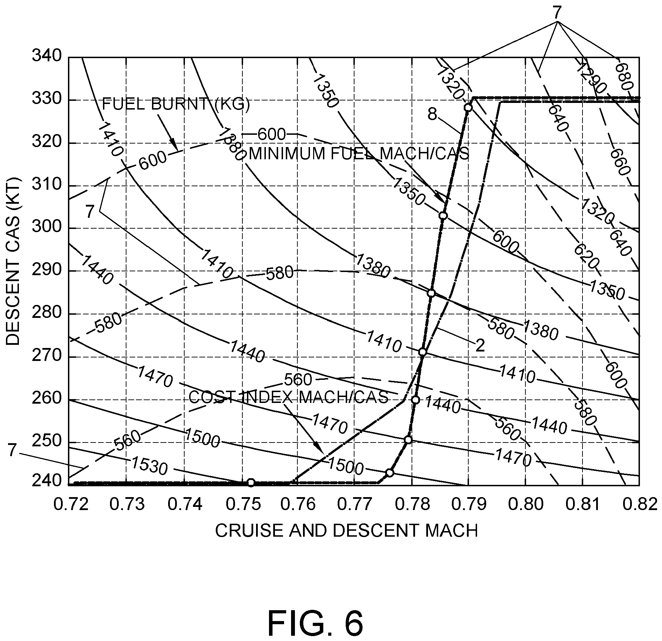

Figure 6 discloses a second particular example of the method of the present disclosure where the selected flight criterion is minimizing fuel consumption during the flight operation. This particular example of the method refers to the flight example described in figures 1 to 4.

After estimating arrival times for each Mach/CAS combination just like the first step of the first particular example of the method previously disclosed, the fuel consumption for all Mach/CAS values is also estimated. Figure 6 shows the contour lines of fuel consumption (thin dashed lines)(7) together with the contour lines of estimated arrival times (thin solid lines).

The points where the time contour lines are tangent to the fuel consumption lines define the Mach/CAS pairs that lead to the most fuel-efficient flight for each arrival time. As can be seen in figure 6, the resulting curve (8) does not coincide with the CI-coupled curve (2). Therefore, when the most efficient flight solution is searched, the CI curve (2) should be disregarded. The next step is finding the collection of Mach/CAS values that define the minimum fuel consumption for each arrival time. Several mathematical optimization algorithms exist to find the curve of minimum fuel consumption.

Once all these points are found, the resulting curve (8) is iterated in order to find the Mach/CAS value for which the estimated arrival time is equal to the RTA. The CI-coupled Mach/CAS curve and the most fuel-efficient Mach/CAS curve will change when flight conditions are different.

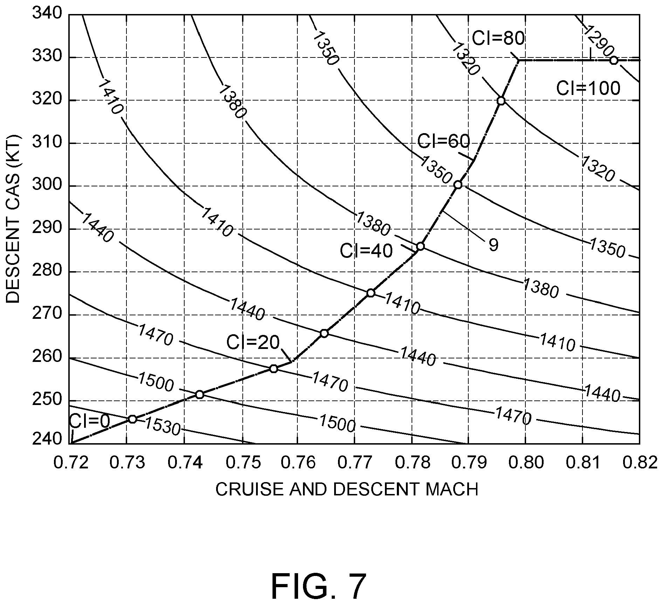

Figure 7 shows the CI-coupled Mach/CAS curve (9) for a second flight example. Said second flight example establishes the following conditions: Wide-Body commercial aircraft; cruising at an altitude of 35000 ft.; maximum landing weight= 86% MLW (14% of reduction with respect to the first flight example); and atmospheric conditions: No winds, and standard atmosphere.

The map of possible arrival times (solid lines) within the speed limits and under the given conditions (initial position, weight, meteorological prediction) is shown. Depending on the CPU capabilities, this map can be calculated with more or less accuracy. Comparing CI curve (1) in figure 4 (first flight example) with CI curve (9) in figure 7, it is obvious that there are significant changes.

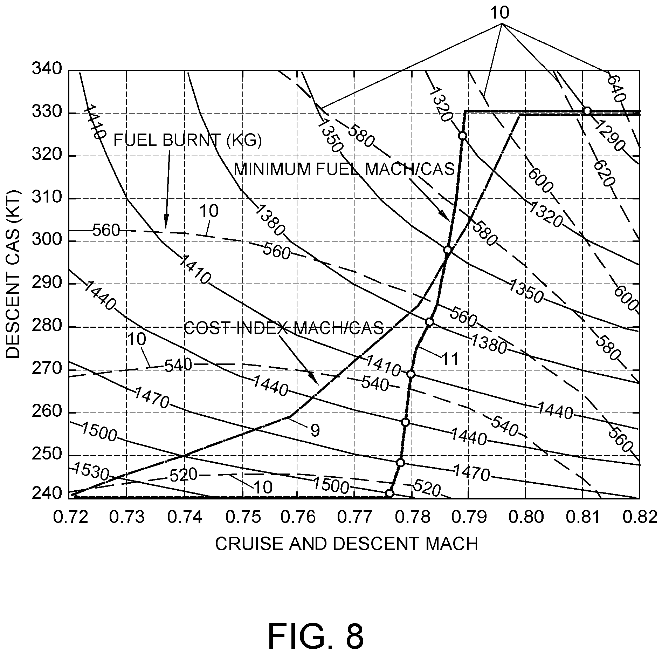

Figure 8 describes a third particular example of the method of the present disclosure where the selected flight criterion is minimizing fuel consumption during flight. This particular example of the method refers to the second flight example described in figure 7. It shows the contour lines of fuel consumption (thin dashed lines) (10) together with the contour lines of estimated time of arrival(thin solid lines).

The points where the estimated time of arrival contour lines are tangent to the fuel consumption contour lines define the Mach/CAS pairs that lead to the most fuel-efficient flight for each estimated time of arrival. Again, the resulting curve (11) does not coincide with the CI-coupled curve (2). Then, the collection of Mach/CAS values that define the minimum fuel consumption for each estimated time of arrival is found and the resulting curve (11) is iterated in order to find the Mach/CAS value for which the estimated time of arrival is equal to the RTA.

The variation in the aircraft weight of this second flight example relative to the first flight example do not provoke important changes in the most fuel-efficient Mach/CAS curves (8,10) shown in figures 6 and 8 respectively. The method can be applied for the speed recalculations during the RTA operation just as described for the first flight example above.

However, more flight criteria may be envisaged. For instance, a fourth particular example of the method of the present disclosure where the selected criterion is obtaining an optimal reference trajectory of the aircraft for general purposes might be also considered. Other flight criterion might be avoiding vertical flight constraints, i.e., avoiding aircraft speed limits applied to aircraft vertical path (note that the vertical path of a descent operation changes when the cruise and descent speeds are modified by the RTA). This flight criterion will force that the resulting vertical profile above a given waypoint is as high as possible to avoid a AT/ABOVE vertical constraint and have generous margin of altitude should the aircraft need to change its vertical path when updating the RTA speed during the RTA operation, and conversely, that the resulting vertical profile is as low as possible to avoid AT/BELOW vertical constraint and have a generous margin of altitude should the aircraft need to change its vertical path when updating the RTA speed during the RTA operation.

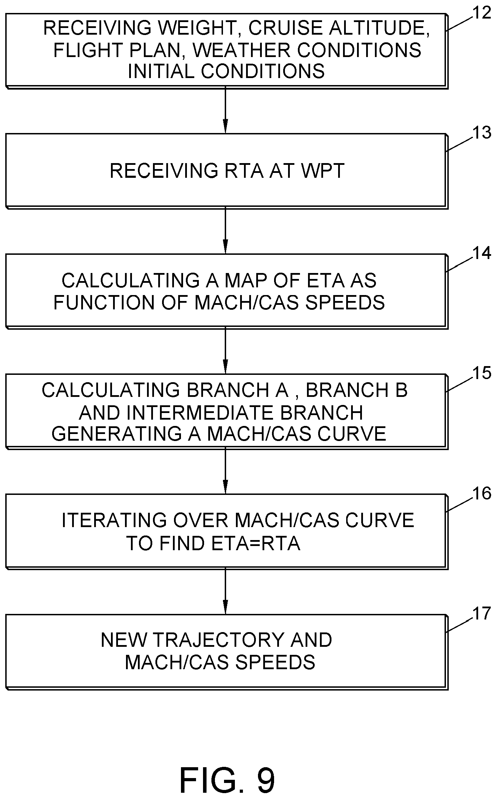

Figure 9 shows a flow diagram of the particular embodiment of the method previously described in figure 5. The flow diagram comprises the following steps:

- receiving (12) a set of given conditions, said given conditions at least comprising the weight of the aircraft, the cruise altitude, the flight plan, the weather conditions and the initial conditions, at the time in which the RTA function is activated;
- receiving (13) the RTA at the target waypoint (WPT) ahead;
- calculating (14) a map of estimated time of arrivals (ETA) at the WPT within the speed limits and under the given conditions. Said map is a function of the cruise Mach and decent CAS of the aircraft;
- calculating (15): branch A, for the larger values of ETA, by obtaining the Mach/CAS combinations that permit the same amount of time delay when the Mach is reduced to its minimum limit, as when the CAS is reduced to its minimum limit; branch B, for the earliest achievable RTAs, by obtaining the Mach/CAS combinations that permit the same amount of time anticipation by increasing the Mach to its maximum limit, as by increasing the descent CAS to its maximum limit; and an intermediate branch that intersects branch A and branch B. The intersection generates a single Mach/CAS curve.
- iterating (16) over the generated Mach/CAs curve to find the cruise Mach and descent CAS combinations that meets ETA=RTA;
- selecting (17) said cruise Mach and descent CAS and establishing the new reference trajectory.

The method described in figure 9 provides the best solution to find the best RTA-constrained trajectories that avoid aircraft speed limits.

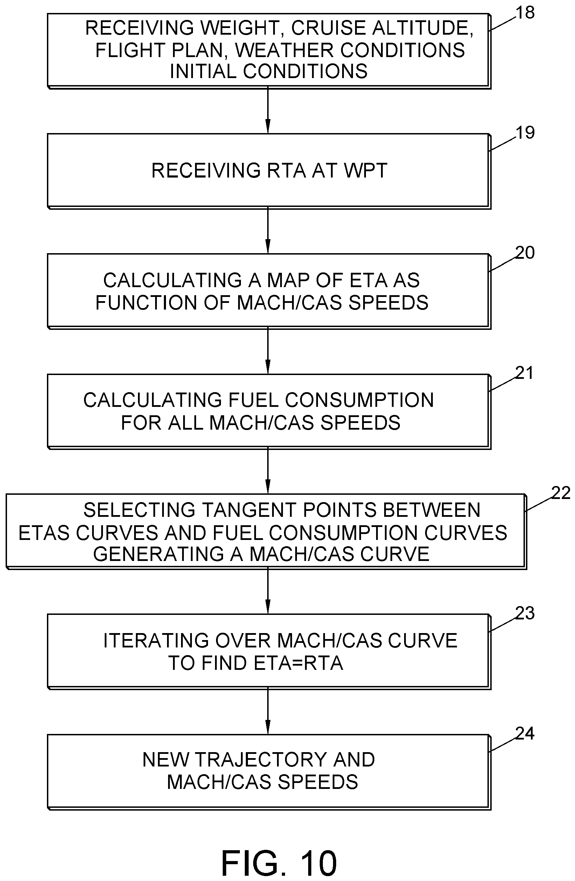

Figure 10 shows a flow diagram of the particular embodiment of the method described in any of figures 6 and 8. The flow diagram comprises the following steps:

- receiving (18) a set of given conditions, said given conditions at least comprising the weight of the aircraft, the cruise altitude, the flight plan, the weather conditions and the initial conditions, at the time in which the RTA function is activated;
- receiving (19) the RTA at the target waypoint (WPT) ahead;
- calculating (20) the map of estimated time of arrivals (ETA) at the WPT within the speed limits and under the given conditions. The ETAs are represented by isocontours in the map;
- calculating the fuel consumption for all Mach/CAS values of the map, and for the given conditions. The fuel consumption values are represented by isocontours in the map;

- selecting (21) Mach/CAS combinations whose value corresponds with tangent points between the ETA isocontours and the fuel consumption isocontours and generating a Mach/CAS curve;
- iterating (22) over the generated Mach/CAS curve to find the cruise Mach and descent CAS combinations that meets ETA=RTA;
- selecting (23) said cruise Mach and descent CAS establishing the new reference trajectory.

The method described in figure 10 provides the best solution to minimizing fuel consumption during the flight operation.

The uncoupling of Mach and CAS to find time-constrained trajectories opens up many possibilities that were discarded with the traditional CI-coupled calculation.

The methods explained above permit to find optimal trajectories subject to a time constraint at a target waypoint. This reference trajectory can then be used by an RTA function, but can also be used as a reference trajectory for a different guidance method such as a 4D guidance reference method.

Further embodiments of the methods disclosed may include a computer programmed to operate in accordance with the methods described herein. The computer may be air-based or land-based. For example, an air-based computer may be associated with an aircraft's flight management system that controls the aircraft on the basis of a calculated optimum maximum range cruise speed. In another example, a land-based computer system may be located at an air traffic control facility or a mission planning facility for use in ground based trajectory prediction or simulation. The computer may include a processor and a memory for a computer program, that when executed causes the processor to operate in accordance with the methods described herein. The computer program may also be embodied in a computer readable medium having stored therein the computer program.

The description of the different advantageous implementations has been presented for purposes of illustration and description, and is not intended to be exhaustive or limited to the implementations in the form disclosed. Many modifications and variations will be apparent to those of ordinary skill in the art. Furthermore, different advantageous implementations may provide different advantages as compared to other advantageous implementations.

**Claims**

1. A method of controlling a flight of an aircraft subjected to a required time of arrival constraint, the method comprising the steps of:

   a) receiving (13) a required time of arrival (RTA) at a target waypoint wherein the target waypoint is located in a descent phase of the flight;
   b) calculating (14) a map of estimated time of arrivals (ETA) at the target waypoint, wherein the map is a function of a cruise speed and of a descent speed of the aircraft, wherein cruise speed and descent speed are within speed limits;

   **characterized in that** the method further comprises:

   c) generating (15) a curve on the map, the curve representing combinations wherein each combination comprises a cruise speed and a descent speed,
   wherein the curve comprises a first branch (2) wherein the cruise and descent speeds of each combination of the first branch (2) introduces a same amount of time delay when the cruise speed is reduced to the minimum cruise speed limit of the aircraft as when the descent speed is reduced to the minimum descent speed limit of the aircraft;
   d) selecting (16) a combination of a cruise speed and a descent speed of the generated curve that complies with RTA=ETA; and
   e) modifying (17) the cruise speed and the descent speed of the aircraft according to the selected combination.

2. The method of claim 1, wherein the curve comprises a second branch (3) wherein the cruise and descent speeds of each combination of the second branch (3) introduces a same amount of time anticipation when cruise speed is increased to a maximum cruise speed limit of the aircraft as when descent speed is increased to a maximum descent speed limit of the aircraft.

3. The method of claim 2, wherein the curve comprises an intermediate branch (4) that intersects the first branch (2) and the second branch (3).

4. The method of claim 3, wherein the cruise speed of each combination of the intermediate branch (4)is fixed to:

$$a = \frac{minimum\ cruise\ speed\ limit\ +\ maximum\ cruise\ speed\ limit}{2}$$

and wherein the curve comprises:

- combinations of the first branch (2) whose cruise speed≤a, the combination with cruise speed=a defining a lower descent speed;
- combinations of the second branch (3) whose cruise speed≥a, the combination with cruise speed=a defining an upper descent speed; and,
- combinations of the third branch (4) whose descent speed is between lower descent speed and upper descent speed.

5. The method of any preceding claim, wherein step b) comprises establishing a contour map wherein each isocontour of the contour map represents a subset of cruise speed and descent speed pairs that satisfies an estimated time of arrival at the target waypoint.

6. The method according to claim 1, further comprising receiving (12) a set of given flight conditions, wherein the given flight conditions comprise at least an aircraft weight, a cruise altitude, a flight plan and weather conditions.

7. The method of any previous claim, wherein the method further comprises receiving a set of predefined or measured conditions for delimiting aircraft speed limits.

8. The method of claim 7, wherein the set of conditions comprises a weight of the aircraft and a cruise altitude.

9. The method of any previous claim, wherein the method further comprises receiving a flight plan, weather conditions, initial aircraft conditions and a cruise altitude, and determining the set of cruise speed and descent speed combinations to the required time of arrival.

10. The method of any previous claim, wherein the method is dynamically and continuously executed during flight so as to modify the aircraft trajectory by changing the cruise speed and descent speed of the aircraft.

11. A system for controlling the flight of an aircraft subjected to a required time of arrival constraint, the system comprising a Flight Management System, a trajectory generator and a speed profile generator, wherein the Flight Management System is in communication with the trajectory generator and the speed profile generator, said Flight Management System being configured for executing the method disclosed in any of the preceding claims 1 to 10, and wherein the speed profile generator is configured for receiving a cruise speed and descent speed combination and generating a speed profile signal in response to said single cruise speed and descent speed combination, and the trajectory generator is configured for receiving the speed profile signal and generating the aircraft trajectory in response to the speed profile signal, so that the aircraft trajectory meets the required time of arrival at the target waypoint.

12. The system of claim 11, wherein the Flight Management System is configured for receiving a weight of the aircraft and a cruise altitude and determining the aircraft speed limits.

13. The system of claim 11, wherein the Flight Management System is configured for receiving a flight plan, weather conditions, initial aircraft conditions and a cruise altitude and determining the set of cruise speed and descent speed combinations corresponding to the required time of arrival.

14. A computer program comprising program code which, when executed by a system according to claim 11, carries out the method of any of claims 1 to 10.

**Patentansprüche**

1. Verfahren zur Steuerung eines Flugs eines Flugzeugs mit einer Ankunftszeitbeschränkung, wobei das Verfahren die folgenden Schritte umfasst:

a) Empfangen (13) einer gewünschten Ankunftszeit (RTA) an einem Zielwegepunkt, wobei sich der Zielwegepunkt in einer Sinkflugphase des Flugs befindet;
b) Berechnen (14) einer Karte geschätzter Ankunftszeiten (ETA) am Zielwegepunkt, wobei die Karte die Funktion einer Reisefluggeschwindigkeit und einer Sinkfluggeschwindigkeit des Flugzeugs ist, wobei Reisefluggeschwindigkeit und Sinkfluggeschwindigkeit innerhalb von Geschwindigkeitsgrenzen liegen;

**dadurch gekennzeichnet, dass** das Verfahren ferner Folgendes umfasst:

c) Erzeugen (15) einer Kurve auf der Karte, wobei die Kurve Kombinationen darstellt, wobei jede Kombination eine Reisefluggeschwindigkeit und eine Sinkfluggeschwindigkeit enthält,
wobei die Kurve einen ersten Zweig (2) umfasst, wobei die Reiseflug- und die Sinkfluggeschwindigkeit jeder Kombination des ersten Zweigs (2) bei Reduzierung der Reisefluggeschwindigkeit auf die Reisefluggeschwindigkeitsuntergrenze des Flugzeugs den gleichen Umfang an Zeitverzögerung wie bei Reduzierung der Sinkfluggeschwindigkeit auf die Sinkfluggeschwindigkeitsuntergrenze des Flugzeugs aufweisen;
d) Auswählen (16) einer Kombination aus einer Reisefluggeschwindigkeit und einer Sinkfluggeschwindigkeit der erzeugten Kurve, die RTA=ETA entspricht; und
e) Ändern (17) der Reisefluggeschwindigkeit und der Sinkfluggeschwindigkeit des Flugzeugs entsprechend der gewählten Kombination.

2. Verfahren nach Anspruch 1, wobei die Kurve einen zweiten Zweig (3) umfasst, wobei die Reisefluggeschwindigkeit und die Sinkfluggeschwindigkeit jeder Kombination des zweiten Zweigs (3) bei Erhöhung der Reisefluggeschwindigkeit auf eine maximale Reisefluggeschwindigkeit des Flugzeugs den gleichen Umfang an Zeitvorsprung wie bei Erhöhung der Sinkfluggeschwindigkeit auf eine maximale Sinkfluggeschwindigkeit des Flugzeugs aufweist.

3. Verfahren nach Anspruch 2, wobei die Kurve einen Zwischenzweig (4), der den ersten Zweig (2) und den zweiten Zweig (3) schneidet, aufweist.

4. Verfahren nach Anspruch 3, wobei die Reisefluggeschwindigkeit jeder Kombination des Zwischenzweigs (4) festgelegt ist auf:

$$a = \frac{\mathit{Reisefluggeschwindigkeitsuntergrenze + Reisefluggeschwindigkeitsobergrenze}}{2}$$

und wobei die Kurve Folgendes umfasst:

- Kombinationen des ersten Zweigs (2), deren Reisefluggeschwindigkeit $\leq a$ ist, wobei die Kombination mit Reisefluggeschwindigkeit = a eine untere Sinkfluggeschwindigkeit definiert;
- Kombinationen des zweiten Zweigs (3), deren Reisefluggeschwindigkeit $\geq a$ ist, wobei die Kombination mit Reisefluggeschwindigkeit = a eine obere Sinkfluggeschwindigkeit definiert; und,
- Kombinationen des dritten Zweigs (4), deren Sinkfluggeschwindigkeit zwischen der unteren Sinkfluggeschwindigkeit und der oberen Sinkfluggeschwindigkeit liegt.

5. Verfahren nach einem der vorstehenden Ansprüche, wobei Schritt b) das Erstellen einer Höhenlinienkarte umfasst, wobei jede Levelmenge der Höhenlinienkarte eine Untermenge von Paaren aus Reisefluggeschwindigkeit und Sinkfluggeschwindigkeit, die eine geschätzte Ankunftszeit am Zielwegepunkt einhält, darstellt.

6. Verfahren nach Anspruch 1, ferner umfassend das Empfangen (12) einer Reihe von gegebenen Flugbedingungen, wobei die gegebenen Flugbedingungen mindestens ein Flugzeuggewicht, eine Reiseflughöhe, einen Flugplan und Wetterbedingungen umfassen.

7. Verfahren nach einem der vorstehenden Ansprüche, wobei das Verfahren ferner das Empfangen einer Reihe von vordefinierten oder gemessenen Bedingungen zur Festlegung der Flugzeuggeschwindigkeitsgrenzen umfasst.

8. Verfahren nach Anspruch 7, wobei die Reihe von Bedingungen ein Flugzeuggewicht und eine Reiseflughöhe umfasst.

9. Verfahren nach einem der vorstehenden Ansprüche, wobei das Verfahren ferner das Empfangen eines Flugplans, von Wetterbedingungen, anfänglichen Flugzeugbedingungen und einer Reiseflughöhe sowie das Bestimmen der Reihe von Reisefluggeschwindigkeits- und Sinkfluggeschwindigkeitskombinationen für die gewünschte Ankunftszeit umfasst.

10. Verfahren nach einem der vorstehenden Ansprüche, wobei das Verfahren zwecks Änderung der Flugbahn des Flugzeugs durch Anpassen der Reisefluggeschwindigkeit und der Sinkfluggeschwindigkeit des Flugzeugs während des Flugs dynamisch und kontinuierlich ausgeführt wird.

11. System zur Steuerung des Flugs eines Flugzeugs mit einer Ankunftszeitbeschränkung, wobei das System ein Flugsteuerungssystem, einen Flugbahngenerator und einen Geschwindigkeitsprofilgenerator umfasst, wobei das Flugsteuerungssystem mit dem Flugbahngenerator und dem Geschwindigkeitsprofilgenerator kommuniziert, wobei das genannte Flugsteuerungssystem zur Ausführung des in einem der vorstehenden Ansprüche 1 bis 10 beschriebenen Verfahrens ausgelegt ist und wobei der Geschwindigkeitsprofilgenerator dazu ausgelegt ist, eine Kombination aus Reisefluggeschwindigkeit und Sinkfluggeschwindigkeit zu empfangen und als Reaktion auf die genannte einzelne Kombination aus Reisefluggeschwindigkeit und Sinkfluggeschwindigkeit ein Geschwindigkeitsprofilsignal zu generieren, und der Flugbahngenerator dazu ausgelegt ist, das Geschwindigkeitsprofilsignal zu empfangen und als Reaktion auf das Geschwindigkeitsprofilsignal die Flugzeugflugbahn zu generieren, sodass durch die Flugzeugflugbahn die gewünschte Ankunftszeit am Zielwegepunkt eingehalten wird.

12. System nach Anspruch 11, wobei das Flugsteuerungssystem zum Empfangen eines Flugzeuggewichts und einer Reiseflughöhe und zum Bestimmen der Flugzeuggeschwindigkeitsgrenzen ausgelegt ist.

13. System nach Anspruch 11, wobei das Flugsteuerungssystem zum Empfangen eines Flugplans, von Wetterbedingungen, anfänglichen Flugzeugbedingungen und einer Reiseflughöhe sowie zum Bestimmen der Reihe von Reisefluggeschwindigkeits- und Sinkfluggeschwindigkeitskombinationen für die gewünschte Ankunftszeit ausgelegt ist.

14. Computerprogramm mit einem Programmcode, der bei seiner Abarbeitung durch ein System nach Anspruch 11 das Verfahren nach einem der Ansprüche 1 bis 10 ausführt.

**Revendications**

1. Procédé de contrôle d'un vol d'un avion soumis à une contrainte d'heure d'arrivée requise, le procédé comprenant les étapes suivantes :

    a) recevoir (13) une heure d'arrivée requise (RTA) à un point de cheminement cible, le point de cheminement cible étant situé dans une phase de descente du vol ;
    b) calculer (14) une carte de l'heure d'arrivée estimée (ETA) au point de cheminement cible, dans lequel la carte est une fonction d'une vitesse de croisière et d'une vitesse de descente de l'avion, dans lequel la vitesse de croisière et la vitesse de descente sont dans les limites de vitesse ;

    **caractérisé en ce que** le procédé comprend en outre :

    c) la génération (15) d'une courbe sur la carte, la courbe représentant des combinaisons dans lesquelles chaque combinaison comprend une vitesse de croisière et une vitesse de descente,
    dans lequel la courbe comprend une première branche (2) dans laquelle les vitesses de croisière et de descente de chaque combinaison de la première branche (2) introduisent une même quantité de retard lorsque la vitesse de croisière est réduite à la limite de vitesse de croisière minimale de l'avion que lorsque la vitesse de descente est réduite à la limite de vitesse de descente minimale de l'avion ;
    d) sélectionner (16) une combinaison d'une vitesse de croisière et d'une vitesse de descente de la courbe générée qui est conforme à RTA=ETA ; et
    e) modifier (17) la vitesse de croisière et la vitesse de descente de l'avion en fonction de la combinaison sélectionnée.

2. Procédé de la revendication 1, dans lequel la courbe comprend une deuxième branche (3) dans laquelle les vitesses de croisière et de descente de chaque combinaison de la deuxième branche (3) introduisent une même quantité d'anticipation de temps lorsque la vitesse de croisière est augmentée jusqu'à une limite de vitesse de croisière maximale de l'avion que lorsque la vitesse de descente est augmentée jusqu'à une limite de vitesse de descente maximale de l'avion.

3. Procédé de la revendication 2, dans lequel la courbe comprend une branche intermédiaire (4) qui intersecte la première branche (2) et la deuxième branche (3).

4. Procédé de la revendication 3, dans lequel la vitesse de croisière de chaque combinaison de la branche intermédiaire (4) est fixée à :

$$\text{"a= "} \text{(vitesse limite de croisière minimale + vitesse limite de croisière maximale)/2 "}$$

et dans lequel la courbe comprend :

- des combinaisons de la première branche (2) dont la vitesse de croisière$\leq a$, la combinaison dont la vitesse de croisière$=a$ définissant une vitesse de descente inférieure ;
- des combinaisons de la deuxième branche (3) dont la vitesse de croisière$\geq a$, la combinaison avec la vitesse de croisière$=a$ définissant une vitesse de descente supérieure ; et,
- les combinaisons de la troisième branche (4) dont la vitesse de descente est comprise entre la vitesse de descente inférieure et la vitesse de descente supérieure.

5. Procédé de toute revendication précédente, dans lequel l'étape b) comprend l'établissement d'une carte de contour dans laquelle chaque isocontour de la carte de contour représente un sous-ensemble de paires de vitesse de croisière et de vitesse de descente qui satisfait un temps d'arrivée estimé au point de passage cible.

6. Procédé selon la revendication 1, comprenant en outre la réception (12) d'un ensemble de conditions de vol données, dans lequel les conditions de vol données comprennent au moins une masse d'avion, une altitude de croisière, un plan de vol et des conditions météorologiques.

7. Procédé selon l'une quelconque des revendications précédentes, dans lequel le procédé comprend en outre la réception d'un ensemble de conditions prédéfinies ou mesurées pour délimiter les limites de vitesse de l'avion.

8. Procédé de la revendication 7, dans lequel l'ensemble de conditions comprend un poids de l'avion et une altitude de croisière.

9. Procédé de toute revendication précédente, dans lequel le procédé comprend en outre la réception d'un plan de vol, des conditions météorologiques, des conditions initiales de l'avion et d'une altitude de croisière, et la détermination de l'ensemble des combinaisons de vitesse de croisière et de vitesse de descente jusqu'à l'heure d'arrivée requise.

10. Procédé de toute revendication précédente, dans lequel le procédé est exécuté de manière dynamique et continue pendant le vol de manière à modifier la trajectoire de l'avion en changeant la vitesse de croisière et la vitesse de descente de l'avion.

11. Système de contrôle du vol d'un avion soumis à une contrainte d'heure d'arrivée requise, le système comprenant un système de gestion de vol, un générateur de trajectoire et un générateur de profil de vitesse, dans lequel le système de gestion de vol est en communication avec le générateur de trajectoire et le générateur de profil de vitesse, ledit système de gestion de vol étant configuré pour exécuter le procédé décrit dans l'une quelconque des revendications précédentes 1 à 10, et dans lequel le générateur de profil de vitesse est configuré pour recevoir une combinaison de vitesse de croisière et de vitesse de descente et générer un signal de profil de vitesse en réponse à ladite combinaison unique de vitesse de croisière et de vitesse de descente, et le générateur de trajectoire est configuré pour recevoir le signal de profil de vitesse et générer la trajectoire de l'avion en réponse au signal de profil de vitesse, de sorte que la trajectoire de l'avion respecte le temps d'arrivée requis au point de cheminement cible.

12. Système de la revendication 11, dans lequel le système de gestion de vol est configuré pour recevoir un poids de l'avion et une altitude de croisière et déterminer les limites de vitesse de l'avion.

13. Système de la revendication 11, dans lequel le système de gestion de vol est configuré pour recevoir un plan de vol, les conditions météorologiques, les conditions initiales de l'avion et une altitude de croisière et déterminer l'ensemble des combinaisons de vitesse de croisière et de vitesse de descente correspondant à l'heure d'arrivée requise.

14. Programme informatique comprenant un code de programme qui, lorsqu'il est exécuté par un système selon la revendication 11, met en œuvre le procédé de l'une quelconque des revendications 1 à 10.

FIG. 1

ALTITUDE AND AIRSPEED PROFILES

FIG. 2

FIG. 3

FIG. 4

FIG. 5

FIG. 6

FIG. 7

FIG. 8

```
┌─────────────────────────────────┐
│ RECEIVING WEIGHT, CRUISE ALTITUDE, │──12
│ FLIGHT PLAN, WEATHER CONDITIONS    │
│ INITIAL CONDITIONS                 │
└─────────────────────────────────┘
              │
              ▼
┌─────────────────────────────────┐
│ RECEIVING RTA AT WPT               │──13
└─────────────────────────────────┘
              │
              ▼
┌─────────────────────────────────┐
│ CALCULATING A MAP OF ETA AS        │──14
│ FUNCTION OF MACH/CAS SPEEDS        │
└─────────────────────────────────┘
              │
              ▼
┌─────────────────────────────────┐
│ CALCULATING BRANCH A , BRANCH B    │──15
│ AND INTERMEDIATE BRANCH            │
│ GENERATING A MACH/CAS CURVE        │
└─────────────────────────────────┘
              │
              ▼
┌─────────────────────────────────┐
│ ITERATING OVER MACH/CAS CURVE      │──16
│ TO FIND ETA=RTA                    │
└─────────────────────────────────┘
              │
              ▼
┌─────────────────────────────────┐
│ NEW TRAJECTORY AND                 │──17
│ MACH/CAS SPEEDS                    │
└─────────────────────────────────┘
```

# FIG. 9

RECEIVING WEIGHT, CRUISE ALTITUDE,
FLIGHT PLAN, WEATHER CONDITIONS
INITIAL CONDITIONS    —18

RECEIVING RTA AT WPT    —19

CALCULATING A MAP OF ETA AS
FUNCTION OF MACH/CAS SPEEDS    —20

CALCULATING FUEL CONSUMPTION
FOR ALL MACH/CAS SPEEDS    —21

SELECTING TANGENT POINTS BETWEEN
ETAS CURVES AND FUEL CONSUMPTION CURVES
GENERATING A MACH/CAS CURVE    —22

ITERATING OVER MACH/CAS CURVE
TO FIND ETA=RTA    —23

NEW TRAJECTORY AND
MACH/CAS SPEEDS    —24

FIG. 10

**EP 3 109 724 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8150565 B2